# EUROPÄISCHE PATENTANMELDUNG

(11) **EP 1 072 767 A2**
(43) Veröffentlichungstag der Anmeldung: **31.01.2001**
(21) Anmeldenummer: 00115613.2
(22) Anmeldetag: 20.07.2000
(51) Int. Cl.: F02B 23/06, F02F 3/26

(54) **Direkteinspritzende luftverdichtende Hubkolben-Brennkraftmaschine**

(30) Priorität: 30.07.1999 DE 19935954
(71) Anmelder: ADAM OPEL AG, 65423 Rüsselsheim (DE)
(72) Erfinder: Braun, Axel, Dipl.-Ing., 66679 Losheim/Bachem (DE)
(74) Vertreter: Bergerin, Ralf, Dipl.-Ing.

(57) **Zusammenfassung**

Die Erfindung bezieht sich auf eine direkteinspritzende luftverdichtende Brennkraftmaschine mit Drallkanal und Füllkanal zum Füllen der jeweiligen Zylinder. Der Kolben (1) hat eine kreisringförmige Brennraummulde (4), in deren Zentrum ein Muldendom (5) angeordnet ist. Der Muldendom (5) ist an seiner oberen Seite mit einer ebenen Stirnfläche (6) versehen. Die Brennraummulde (4) ist von einer Abrisskante (7) begrenzt, an die eine Kragenfläche (10) anschließt. Eine Mehrloch-Einspritzdüse (2) richtet ihre Strahlen (14) über den Rand (13) - diesen berührend - auf die Abrisskante (7). Durch die Ausbildung des Muldendomes (5) wird dem vom Drallkanal initiierten Drall der Luft um die Zylinderachse - der von der Kragenfläche (10) stabilisiert wird - ein Drall senkrecht zur Zylinderachse überlagert. Dieser Drall verläuft walzenförmig innerhalb der Brennraummulde (4). Die Einspritzstrahlen (14) werden am Rand (13) aufgerissen. Die dabei entstehenden sehr feinen Kraftstofftropfen können sich mit der stark bewegten Luft im freien Brennraum der Brennraummulde (4) innig vermischen.

Die Gemischbildung wird verbessert. Bei Volllast kann die maximale Einspritzmasse und damit das Drehmoment erhöht werden, ohne dass das Schwarzrauch-Verhalten verschlechtert wird. Der Zündverzug wird minimiert. Dies führt zur Verbrauchsreduzierung und Reduzierung der schädlichen Anteile im Abgas. Der Kaltleerlauf wird durch die effizientere Verbrennung verbessert.

## Beschreibung

Die Erfindung betrifft eine direkteinspritzende luftverdichtende Hubkolben-Brennkraftmaschine gemäß dem Oberbegriff des Patentanspruches 1.

Mit DE 33 27 998 A1 ist eine direkteinspritzende Diesel-Brennkraftmaschine beschrieben, die einen Kolben aufweist, in dessen Kolbenboden ein ringförmiger Brennraum angeordnet ist und mit einer als Einlochdüse ausgebildeten Einspritzdüse, deren Strahl auf eine im Brennraum angeordnete Prallfläche gerichtet ist, die den Kraftstoffstrahl gleichmäßig nach allen Seiten in den freien Brennraum ablenkt. Die Prallfläche ist dabei auf einer zentrisch im Brennraum befindlichen Bodenerhebung ausgebildet.

Ferner ist in DE 196 31 600 C1 ein Kolben für eine luftverdichtende Hubkolben-Brennkraftmaschine mit direkter Kraftstoffeinspritzung beschrieben, der eine Brennraummulde mit einem an deren Boden befindlichen Kegelstumpf aufweist, der mit der Stirnseite des Kolbens eben abschließt und eine Anzahl von Ausnehmungen hat, die sich von der Mitte des Kegelstumpfes radial nach außen erstrecken, sich dabei strahlenförmig aufweiten und nach außen hin vertiefen. Die Brennraummulde ist am oberen Rand eingeschnürt. Eine Mehrloch-Einspritzdüse richtet ihre Strahlen entlang der Ausnehmungen auf den gewölbten Teil der Wand der Brennraummulde.

Ausgehend von diesem Stand der Technik ist es Aufgabe der Erfindung, eine direkteinspritzende luftverdichtende Hubkolben-Brennkraftmaschine zu schaffen, bei der durch die Geometrie des Kolbens in Verbindung mit der Zuordnung einer Mehrloch-Einspritzdüse und bei Vorhandensein zumindest eines Drallkanals und eines Füllkanals zur Luftzuführung von Luft in den Zylinder eine verbesserte Gemischaufbereitung und eine damit verbundene verbesserte Verbrennung gefördert wird, so dass die im Abgas verbleibenden Schadstoffe reduziert und die Leistungsparameter der Brennkraftmaschine verbessert werden.

Die Erfindung löst diese Aufgabe mit den Merkmalen des Patentanspruches 1. Die Merkmale der Unteransprüche zeigen vorteilhafte Weiterbildungen der Erfindung auf.

Durch die Erfindung wird dem insbesondere durch den Drallkanal im Brennraum initiierten Drall der Luft um die Zylinderachse eine Bahn innerhalb des kreisringförmigen Brennraumes vorgegeben, wobei durch den Muldendom ein Überströmen der Luft in die Muldenmitte verhindert ist. Dadurch wird die Rotation der Luft in der Brennraummulde gegenüber einem Brennraum ohne Muldendom bei identischem Zylinderdrall erheblich verstärkt.

Bei Einspritzung und Zündung des Kraftstoffes befindet sich der Kolben sehr nahe dem Zylinderkopf. Durch die konkave Ausbildung des Muldendoms in Verbindung mit der konkaven Ausbildung der Brennraummulde selbst sowie durch den Zylinderkopf als Reflektionsfläche wird beim Übertritt der Luft in die Brennraummulde ein Drall senkrecht zur Zylinderachse initiiert, der sich rings um den Muldendom erstreckt und der sich dem Drall um die Zylinderachse überlagert. Dieses Drallverhalten bleibt während der Kraftstoff-Einspritzzeit relativ stabil.

Die von der Einspritzdüse abgegebenen Einspritzstrahlen sind so gerichtet, daß sie nahe dem oberen Totpunkt des Kolbens die Kante der Stirnfläche des Muldendoms treffen. Jeder der Strahlen wird dann an dieser Kante aufgerissen und zum Raum der Brennraummulde gelenkt. Die dabei entstehenden sehr feinen Brennstoff-Tropfen werden in dem doppelten Luftdrall innerhalb des freien Brennraums sehr gut mit der Luft vermischt.

Durch die Anordnung der Stirnfläche des Muldendoms in einer Ebene mit der Abrißkante am äußeren Umfang der Öffnung der Brennraummulde entsteht zwischen Brennraummulde und Kolbenstirnfläche eine Kragenfläche, welche die Luftbewegung über dem Kolben stabilisiert.

Der Muldendom ist über einen wesentlichen Teil seiner Höhe vorteilhaft zylinderförmig gestaltet, wobei dann der zylindrische Teil abgerundet in konkaver Form in den Boden der Brennraummulde übergeht. Es kann aber auch von Vorteil sein, anstelle des zylindrischen Teils am Muldendom eine kegelstumpfförmigen Teil vorzusehen, wobei der Kegelstumpf sowohl mit seiner großen Basis als auch mit seiner kleinen Basis zum Grund der Brennraummulde gerichtet sein kann. Durch die Wahl der Form des Muldendomes kann so erheblicher Einfluß auf die Ausbildung des Luftwirbels in der Brennraummulde genommen werden.

Insbesondere bei einem ölgekühlten Kolben kann es auch vorteilhaft sein, im Muldendom einen Kühlkanal vorzusehen, um der Gefahr eines Hot-Spots an diesem Bauteil vorzubeugen bzw. durch Verminderung der Brennraumtemperatur eine Absenkung des NOX-Anteils im Abgas zu erreichen.

Das Zusammenwirken der optimierten Luftströmung mit der durch das Aufreißen der Einspritz-Strahlen optimierten Kraftstoffverteilung wird die Gemischbildung erheblich verbessert. Dies bedeutet, dass bei Volllast der Brennkraftmaschine die Luftausnutzung verbessert wird, wodurch unter sonst gleichen Bedingungen, z. B. dem Vermeiden von Schwarzrauch, die maximale Einspritzmasse angehoben werden kann und so im Ergebnis das Drehmoment steigt.

Bei Teillast der Brennkraftmaschine wird durch die erzielbare optimierte Gemischbildung der Zündverzug minimiert. Dies führt zum Absenken des Kraftstoffverbrauches und zur Reduzierung der Abgasemission. Zusätzlich wird durch die verbesserte Gemischbildung der Kaltleerlauf durch die effizientere Verbrennung verbessert.

Ein Ausführungsbeispiel der Erfindung ist nachstehend anhand einer Zeichnung näher beschrieben.

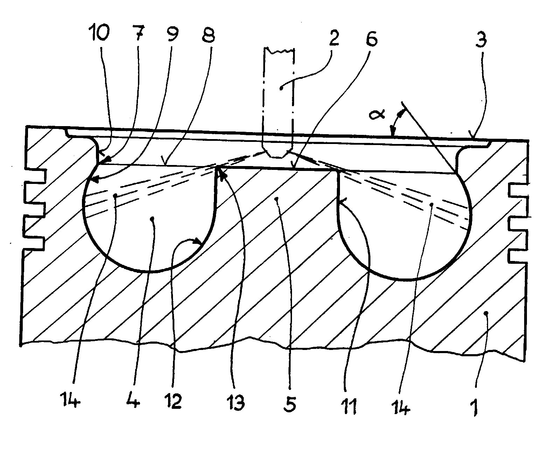

Die einzige Figur der Zeichnung zeigt in vereinfachter Form als Schnitt durch die Mittelachse einen Kolben einer erfindungsgemäßen Brennkraftmaschine nahe OT sowie die Form der Einspritzstrahlen.

Der Kolben 1 ist in an sich bekannter Weise in einem Zylinder geführt und über eine Pleuelstange mit einer Kurbelwelle verbunden. Der Zylinder ist an seiner Oberseite durch einen Zylinderkopf abgeschlossen. Zwischen dem Kolben 1, dem Zylinder und dem Zylinderkopf ist ein Brennraum gebildet, zu dem im Zylinderkopf zumindest ein Drallkanal und ein Füllungskanal, beide von Einlassventilen gesteuert, führen. Des weiteren ist im Zylinderkopf zumindest ein von einem Auslassventil gesteuerter Auslasskanal vorgesehen. Am Zylinderkopf befindet sich zentrisch zum Kolben 1 eine Mehrloch-Einspritzdüse 2.

Die Form des Brennraumes wird im wesentlichen durch die Form des Kolbens 1 bestimmt. Der Kolben 1 ist zum Zylinderkopf hin durch eine Kolbenstirnseite 3 begrenzt. An dieser befindet sich eine Brennraummulde 4, die sich ringförmig um einen Muldendom 5 erstreckt. Der Muldendom 5 hat an seiner oberen, dem Zylinderkopf zugewandten Seite eine eben verlaufende Stirnfläche 6, die zur Kolbenstirnseite 3 parallel verläuft.

Am äußeren Umfang der Öffnung der Brennraummulde 4 befindet sich eine Abrisskante 7. Die Stirnfläche 6 des Muldendomes 5 und die Abrisskante 7 liegen in einer gemeinsamen Ebene 8. Die Abrisskante 7 ist begrenzt von einer äußeren Wandung 9 der Brennraummulde 4 und von einer nahezu zylindrischen Kragenfläche 10. Die äußere Wandung 9 der Brennraummulde 4 schließt gegenüber der Kolbenstirnseite 3 einen spitzen Winkel α ein. Der Muldendom 5 bildet nahe seiner Stirnfläche 6 eine Zylinderfläche 11. Am Grunde der Brennraummulde 4 weist der Muldendom 5 eine konkave Form auf, in dem er mit einer Abrundung 12 in den Grund der Brennraummulde 4 übergeht. Zwischen der Stirnfläche 6 und der Zylinderfläche 11 ist ein umlaufender Rand 13 gebildet. Im Ausführungsbeispiel ist diese Kante 13 - im Schnitt betrachtet - rechtwinklig.

Die im Zylinderkopf gehaltene Einspritzdüse 2 ist so angeordnet, daß die von ihr ausgehenden Kraftstoff-Strahlen 14 nahe dem oberen Totpunkt des Kolbens über den Rand 13 der Stirnfläche 6 streichen, dort aufgerissen werden und dann in den freien Brennraum der Brennraummulde 4 in Richtung auf die Abrisskante 7 gelenkt werden. Nur ein geringer Teil der dadurch sehr fein zerteilten Kraftstoff-Tröpfchen gelangt bis an die äußere Wandung 9 der Brennraummulde 4.

Durch die besondere Form des Brennraumes mit dem Muldendom 5 bildet sich in der Brennraummulde 4 neben dem vom Drallkanal initiierten Luftwirbel um die Zylinderachse mit zunehmender Verdichtung eine ringförmige Wirbelwalze, deren Mittellinie kreisförmig um den Muldendom 5 verläuft, d. h., es wird ein Drall senkrecht zur Zylinderachse initiiert.

Beide Drallbewegungen überlagern sich. Dieses Drallverhalten ist während der Einspritzzeit relativ stabil, so dass eine sehr homogene Gemischbildung erfolgt. Die Kragenfläche 10 stabilisiert dabei den Drall um die Zylinderachse, während der senkrecht dazu verlaufende Drall innerhalb der Brennraummulde 4 geführt ist.

## Patentansprüche

1. Direkteinspritzende luftverdichtende Hubkolben-Brennkraftmaschine mit mindestens einem Zylinder und einem darin beweglichen Kolben sowie einem den Zylinder nach oben abschließenden Zylinderkopf mit einem von einem Einlassventil gesteuerten Drall erzeugenden Einlasskanal und mindestens einem von einem Einlassventil gesteuerten Auslasskanal sowie mit einer zentrisch zum Zylinder angeordneten Mehrloch-Einspritzdüse, wobei der Kolben mit einer kreisringförmigen, mit einer Öffnung zum Zylinderkopf weisenden, sich nach unten erweiternden Brennraummulde versehen ist, in deren Mitte ein zentralsymmetrischer Muldendom angeordnet ist, **dadurch gekennzeichnet,** daß der Muldendom (5) an seiner oberen, dem Zylinderkopf zugewandten Seite eine ebene, parallel zur Kolbenstirnseite (3) verlaufende Stirnfläche (6) aufweist, die in einer Ebene (8) mit einer am äußeren Umfang der Öffnung der Brennraummulde (4) befindlichen Abrisskante (7) liegt, die von einer äußeren Wandung (9) der Brennraummulde (4) begrenzt ist, die äußere Wandung (9) im Bereich der Abrisskante (7) gegenüber der Kolbenstirnseite (3) einen spitzen Winkel (α) einschließt und damit die Abrisskante (7) bildet und die Strahlen (14) der Einspritzdüse (2) in einer Kolbenstellung nahe OT den Rand (13) der Stirnfläche (6) des Muldendomes (5) überstreichen und auf die Abrisskante (7) gerichtet sind.

2. Brennkraftmaschine nach Anspruch 1, **dadurch gekennzeichnet,** daß die Abrisskante (7) gegenüber der Kolbenstirnseite (3) axial zurückgesetzt ist, so dass zwischen der Kolbenstirnseite (3) und der Abrisskante (7) eine Kragenfläche (10) verbleibt.

3. Brennkraftmaschine nach Anspruch 1 oder 2, **dadurch gekennzeichnet,** daß der Muldendom (5) im wesentlichen zylinderförmig ist.

4. Brennkraftmaschine nach Anspruch 1 oder 2, **dadurch gekennzeichnet,** daß der Muldendom (5) im wesentlichen kegelstumpfförmig ist und mit seiner größeren Basis am Grund der Brennraummulde (4) aufsitzt.

5. Brennkraftmaschine nach Anspruch 1 oder 2, **dadurch gekennzeichnet,** daß der Muldendom (5) im wesentlichen kegelstumpfförmig ist und mit seiner kleineren Basis am Grund der Brennraummulde (4) aufsitzt.

6. Brennkraftmaschine nach einem oder mehreren der Ansprüche 1 bis 5, **dadurch gekennzeichnet,** daß der Muldendom (5) an seinem Umfang eine konkave Form aufweist und abgerundet (12) in die Fläche des Grundes der Brennraummulde (4) übergeht.

7. Brennkraftmaschine nach einem oder mehreren der Ansprüche 1 bis 6, **dadurch gekennzeichnet,** daß der Muldendom (5) einen Kühlkanal enthält.
